# EUROPÄISCHE PATENTANMELDUNG

(11) **EP 0 791 320 A1**
(43) Veröffentlichungstag der Anmeldung: **27.08.1997**
(21) Anmeldenummer: 96114788.1
(22) Anmeldetag: 16.09.1996
(51) Int. Cl.: A47J 29/00, A47J 29/06

(54) **Gerät zum Kochen von Eiern**

(30) Priorität: 23.02.1996 DE 29603112 U
(71) Anmelder: GEBRÜDER FUNKE KG, D-59846 Sundern (DE)
(72) Erfinder: Funke, Peter, 59846 Sundern (DE)
(74) Vertreter: Patentanwälte Ostriga & Sonnet

(57) **Zusammenfassung**

Dargestellt und beschrieben ist ein Gerät zum Kochen von Eiern in Gestalt eines in einen mit zu erhitzendem Wasser gefüllten Topf zu stellenden Einsatzes mit einer insbesondere ringförmig um die Vertikalachse eines Zentralkörpers geräteunten angeordneten Eiauflage. Zur Überwachung und Anzeige der Kock- bzw. Garzeit ist in dem Gerät, insbesondere in dessen Zentralkörper, eine elektronische Schaltung enthalten mit einem Temperaturfühler (17), einem Zeitglied (22) und einem akustischen Signalbaustein (23), welche Bausteine derart geschaltet sind, daß bei Erreichen einer vorgegebenen Temperatur der Temperaturfühler (17) das Zeitglied (21) ansteuert, welches nach Ablauf voreingestellter Zeitspannen den Signalbaustein (23) mit unterschiedlichen Steuerbefehlen ansteuert, derart, daß jedes Signal bzw. jede Signalfolge von dem voraufgegangenen verschieden ist.

## Beschreibung

Die Erfindung bezieht sich auf ein Gerät zum Kochen von Eiern nach dem Oberbegriff des Anspruchs 1.

Ein solches, durch offenkundige Vorbenutzung bekanntes Gerät ist im Prinzip ein Eiertraggestell, das man in einen mit einer bestimmten gewählten Menge an Wasser gefüllten Kochtopf einsetzt. In Abhängigkeit von Wasserstand und der Anzahl der zu kochenden Eier läßt sich deren gewünschter Garzustand in einer mit diesen Vorgaben passenden, auf Erfahrung beruhenden Kochzeit erreichen. Diese Zeit ist auch abhängig davon, ob mit der Zeitmessung beim Aufsetzen auf den Herd begonnen wird, oder - was besser reproduzierbare Ergebnisse bringt - erst dann, wenn das Wasser zu sieden beginnt. Die erwünschte Zeitdauer der Eierbehandlung wird üblicherweise mittels Eieruhr oder einem sonstigen Zeitmeßinstrument eingestellt bzw. überwacht.

Der Erfindung liegt die Aufgabe zugrunde, ein gattungsgemäßes Gerät zur Verfügung zu stellen, welches bei einfacher Ausgestaltung die Überwachung der gewünschten Koch- bzw. Garzeit nach dem Prinzip des Sehens und Gebrauchens gestattet.

Die Erfindung löst diese Aufgabe mit den Merkmalen des Anspruchs 1 und ist diesem entsprechend dadurch gekennzeichnet, daß in dem Gerät, insbesondere in dessen Zentralkörper, eine elektronische Schaltung enthalten ist mit einem Temperaturfühler, einem Zeitglied und einem akustischen Signalbaustein, welche Bausteine derart geschaltet sind, daß bei Erreichen einer vorgegebenen Temperatur der Temperaturfühler das Zeitglied ansteuert, welches nach Ablauf voreingestellter Zeitspannen den Signalbaustein mit unterschiedlichen Steuerbefehlen ansteuert, derart, daß jedes Signal bzw. jede Signalfolge von dem voraufgegangenen verschieden ist.

Einer Einstellung der Gar- bzw. Kochzeit bedarf es dabei nicht; sie ist in der temperaturfühlenden Auswerte- und Signalelektronik gewissermaßen fest eingestellt. Vorzugsweise wird die Elektronik so eingerichtet sein, daß der Temperaturfühler anspricht und das Zeitglied einschaltet, wenn die Temperatur - je nach Ausführung des Geräts die Dampftemperatur oder die Wassertemperatur - ein dem Siedepunkt des Wassers entsprechendes Niveau erreicht hat. Nach Ablauf einer Zeit von sodann beispielsweise 5 Minuten veranlaßt die Schaltung den Signalbaustein, ein einzelnes Signal bestimmter Dauer oder eine einprägsame Signalfolge wie zweimaliges, kurzes Piepsen ertönen zu lassen. Nach Ablauf einer weiteren Zeitspanne von z.B. 2 min, also insgesamt nach 7 min seit Beginn der Zeitmessung, wird ein vom ersten Signal verschiedenen zweites Signal bzw. eine neue Tonfolge wie beispielsweise fünfmaliges Piepsen ertönen. Nach nochmals z.B. 3 min, also 10 min seit Kochbeginn, könnte etwa ein Dauerton erklingen.

Die Schwelltemperatur zur Ansteuerung des Zeitglieds durch den Temperaturfühler, sowie Art, Frequenz und Dauer der Töne oder Tonfolgen bzw. -intervalle legt der Elektronikfachmann bei der konkreten Auslegung der Schaltung und mit der Auswahl des Signalsbausteins fest.

Der Benutzer des Eierkochgeräts hat nicht mehr zu tun, als das Gerät mit einem oder mehreren Eiern zu bestücken, es in einen Topf mit Wasser zu stellen und am Herd für Energiezufuhr zu sorgen, die erforderlich ist, um das Wasser zum Kochen zu bringen. Je nach den erklingenden Tönen, Tonfolgen oder Intervallsignalen kann er den Kochvorgang beenden oder unterbrechen, um nur einen Teil der insgesamt dem Kochvorgang unterzogenen Eier zu entnehmen, sobald das Ei / die Eier den dem Signal entsprechenden gewünschten Kochgrad erreicht haben, wie etwa 'sehr weich', 'wachsweich' oder 'hart'.

Das Gerät selbst ist sehr einfach aufgebaut und die Elektronik dicht darin untergebracht, so daß sie auch beim Abwaschen des Geräts keinen Schaden nehmen kann.

Um das Gerät in Betriebsbereitschaft zu versetzen, ist allenfals ein Schalter zu betätigen. Bei dem Ausführungsbeispiel, bei dem der Schalter freie Kontakte umfaßt, die vom Wasser, in welches das Gerät eingesetzt wird, galvanisch verbindbar sind, geschieht das An- und Abschalten der Spannungsversorgung durch bloßes Einsetzen in das Wasser oder Herausnehmen aus dem Kochtopf vollautomatisch.

Die Erfindung wird nun im einzelnen anhand zweier in der Zeichnung dargestellter Ausführungsbeispiele noch näher erläutert. Darin zeigen:
- Fig. 1: ein Eierkochgerät entsprechend einem ersten Ausführungsbeispiel der Erfindung, teils im Langsschnitt, teils in Ansicht,
- Fig. 2: eine Aufsicht auf das Gerät nach Fig. 1, und
- Fig. 3: ein Eierkochgerät entsprechend einem zweiten Ausführungsbeispiel der Erfindung im Längsschnitt.

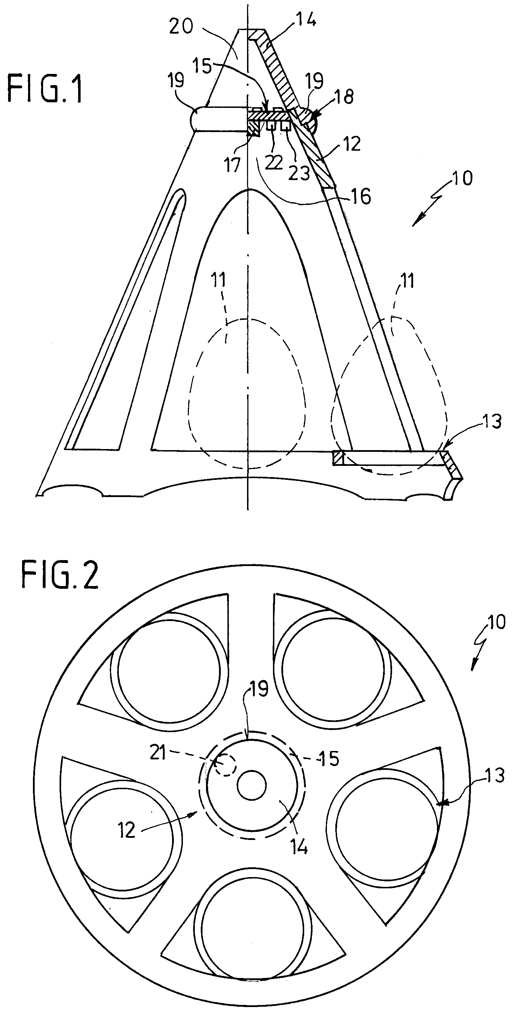

Ein in seiner Gesamtheit mit 10 bezeichnetes Gerät zum Kochen von Eiern 11 umfaßt entsprechend Fig. 1 und 2 zwei Teile aus Kunststoff, und zwar einen im wesentlichen konusförmigen Zentralkörper 12 mit Eiauflage 13 und einen oberseitigen Deckel 14 sowie eine elektronische Schaltungsplatine 15, die im Bereich zwischen diesen Teilen angeordnet ist.

Der Zentralkörper 12 bildet mit der Eiauflage 13 ein einstückiges Kunststoffspritzgießteil aus. Ebenfalls als Kunststoffspritzgießteil ist der Deckel 14 ausgeführt.

Die elektronische Schaltungsplatine 15 bildet den oberen Abschluß des hohlen, kegelstumpfförmigen obersten Abschnitts des Zentralkörpers 12 aus und ist hierin dicht eingepaßt. Unterhalb dieser von der Platine 15 bereitgestellten dichten Wand ist ein Dampfsammelraum 16 ausgebildet. Zu diesem Dampfsammelraum 16 hin ist die elektronische Schaltungsplatine 15 versiegelt, z.B. mittels eines üblichen Gießharzes vergossen oder mit einer Isolierschicht überzogen.

Der kegelstumpfförmige Deckel 14 ist, wie aus Fig. 1 ersichtlich, oben auf das Ende des Hohlkegels 12 aufsetzbar und mit diesem lösbar kuppelbar, z.B. mit Hilfe eines mit 18 lediglich schematisch angedeuteten Bajonettverschlusses. Am Deckel 14 befindet sich ein die Kupplungszone übergreifender Kragen 19, der eine Abdichtfunktion hat. Stattdessen könnte aber auch ein Dichtring zwischen die Teile eingelegt sein.

Der Innenraum 20 des Deckels 14 ist nach außen hin verschlossen, unterseitig durch die Schaltungsplatine 15. Auf deren in den Raum 20 weisenden Seite befindet sich ein in Fig. 2 angedeutetes Batteriefach 21, um im Bedarfsfall nach Abnehmen des Deckels 14 die Batterie, die zum Betrieb der elektronischen Schaltung erforderlich ist, auswechseln zu können.

Im übrigen befindet sich am Gerät zweckmäßigerweise ein Schalter, mit dem die Stromleitung von der Batterie wahlweise getrennt oder an den Schaltkreis angelegt werden kann, um bei Nichtgebrauch die Batterie zu schonen. Der in Fig. 1 und 2 nicht dargestellte Schalter kann als drehbetätigbarer Schalter ausgebildet sein, so daß er bei geringfügiger Verdrehung des Deckels 14 gegenüber dem Konus 12, ohne sich von diesem zu lösen, bedarfsweise geöffnet oder geschlossen werden kann.

Im zusammengebauten Zustand entsprechend Fig. 1 bildet der Zentralkörper 12 mit dem Deckel 14 eine abgedichtete Einheit aus, während die Schaltungsplatine 15 zum Dampfsammelraum 16 hin gekapselt, insbesondere versiegelt ist. Somit kann das Gerät problemlos gereinigt werden, ohne daß ein Schaden an der Elektronik zu befürchten ist.

Die elektronische Schaltung weist im wesentlichen außer einem Temperaturfühler 17 ein Zeitglied 22 sowie einen elektronischen Signalbaustein 23 auf. Die Schaltung ist so ausgelegt, daß der Temperaturfühler 17 bei Erkennen einer schaltungstechnisch vorgegebenen Grenz-Temperatur im Dampfsammelraum 16 das Zeitglied 22 ansteuert, welches nach Ablauf einer ersten Zeitspanne seinerseits den Signalbaustein 23 derart ansteuert, daß er ein Signal bestimmter Frequenz und bestimmter Zeitdauer oder auch eine Tonfolge bzw. Tonimpulse aussendet. Nach Ablauf einer weiteren Zeitspanne steuert das Zeitglied 22 den Signalbaustein 23 erneut an, veranlaßt ihn jetzt jedoch, einen anderen Ton oder eine andere Tonfolge als zuvor ertönen zu lassen. Dies kann sich noch ein- oder zweimal wiederholen nach Ablauf weiterer vorgegebener Zeitspannen, wobei jedesmal ein von voraufgegangenen akustischen Signalen einwandfrei unterscheidbares anderes akustisches Signal erzeugt wird.

Auf diese Weise können insbesondere die typischen Kochzeiten für die am häufigsten gewünschten Zustände von Eiern akustisch signalisiert werden, so z.B. nach Ablauf von vier oder fünf Minuten seit Erreichen der Siedetemperatur des Wassers den Zustand für ein sehr weiches Ei, nach sechs oder sieben Minuten für ein weiches Ei und nach etwa zehn Minuten oder mehr für ein hartgekochtes Ei.

Wichtig ist, daß der Benutzer des Geräts keinen Zeitpunkt, wie ansonsten üblicherweise das Erreichen des Siedepunktes des Wassers, zu überwachen hat, ab dem eine Zeitmessung zu erfolgen hat, denn das erledigt die Elektronik für ihn automatisch. Die Eier können kalt aufgesetzt werde, gleichwohl ist das Kochergebnis stets zufriedenstellend, unter der einzigen Voraussetzung, daß der Benutzer den Kochvorgang abbricht, wenn ihm das akustische Signal dessen vorbestimmtes Ende anzeigt.

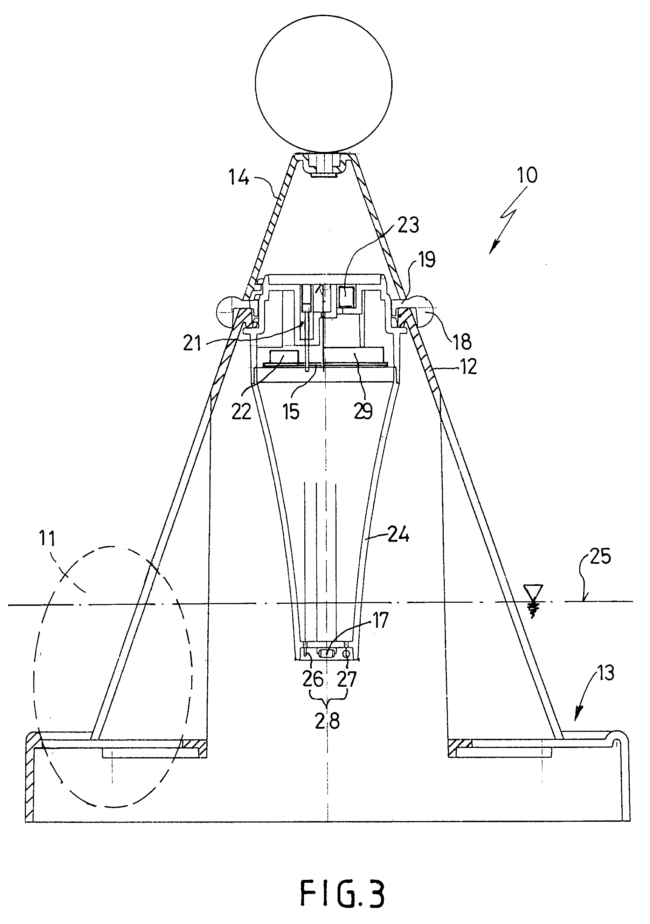

Während bei dem bisher beschriebenen Ausführungsbeispiel die Dampftemperatur gefühlt und ausgewertet wird, geschieht die Temperatursteuerung bei dem in Fig. 3 schematisch dargestellten Ausführungsbeispiel anhand der Temperatur des Wassers im nicht dargestellten Kochtopf. Zu diesem Zweck befindet sich der Temperaturfühler 17 - z.B. ein NTC - im Endbereich eines nach unten weisenden zentralen Gehäuseteils 24 in einer Ebene zwischen den Eiern 11 und folglich bei Betrieb des Geräts 10 unterhalb des mit 25 bezeichneten Wasserspiegels. Der Temperaturfühler 17 kann zum Schutz gegen korrosive Einflüsse gekapselt, insbesondere eingegossen sein.

Außerdem befinden sich in der unteren Spitze des Gehäuseteils 24 - freiliegend - zwei Kontakte 26 und 27. Sie sind Bestandteil eines automatischen Ein-/Ausschalters 28, dessen Betätigungsglie vom Wasser gebildet ist, in das das Gerät hineingestellt wird. Das Wasser verbindet die Kontakte 26 und 27 galvanisch miteinander, schließt sie also kurz. Einer der beiden Kontakte 26 oder 27 steht zweckmäßigerweise mit einer Elektrode der Batterie in unmittelbarer Verbindung. Die Schaltung erkennt demzufolge den zu ihrer Funktion erforderlichen Einsatzzustand des Geräts im Wasser automatisch und schaltet sich - ebenso selbsttätig - von der Spannungsquelle ab, sobald das Gerät aus dem Wasser genommen wird.

Die übrigen Merkmale dieser zweiten Ausführungsform sind denen der ersten ähnlich oder gleichwirkend. Dies gilt insbesondere im Hinblick auf die wasser und dampfdichte Kapselung der elektronischen Schaltung, z.B. dadurch, daß sie vergossen oder anderweitig abgedichtet ist. Mit 29 ist noch ein elektronischer Schaltungsteil bezeichnet, der weitere Bauelemente enthalten kann, wie z.B. Operationsvertärker, eine Logik u.dgl. zum sinnvollen Betrieb der EInrichtung erforderliche und zweckmäßige Bauelemente.

## Patentansprüche

1. Gerät zum Kochen von Eiern in Gestalt eines in einen mit zu erhitzendem Wasser gefüllten Topf zu stellenden Einsatzes mit einer insbesondere ringförmig um die Vertikalachse eines Zentralkörpers geräteunten angeordneten Eiauflage, dadurch gekennzeichnet, daß in dem Gerät, insbesondere in dessen Zentralkörper, eine elektronische Schaltung enthalten ist mit einem Temperaturfühler (17), einem Zeitglied (22) und einem akustischen Signalbaustein (23), welche Bausteine derart geschaltet sind, daß bei Erreichen einer vorgegebenen Temperatur der Temperaturfühler (17) das Zeitglied (21) ansteuert, welches nach Ablauf voreingestellter Zeitspannen den Signalbaustein (23) mit unterschiedlichen Steuerbefehlen ansteuert, derart, daß jedes Signal bzw. jede Signalfolge von dem voraufgegangenen verschieden ist.

2. Gerät nach Anspruch 1, dadurch gekennzeichnet, daß der Zentralkörper (12) einen nach unten zur Eiauflage (13) hin offenen, hohlen Zylinder- oder Kegelstumpfabschnitt umfaßt mit einer oberen, dampfdichten Decke als Abschluß eines Dampfsammelraums (16), in dem die elektronische Schaltung (15), dampfdicht versiegelt, angeordnet ist.

3. Gerät nach Anspruch 1 oder 2, dadurch gekennzeichnet, daß die Schaltungsplatine der Schaltung versiegelt und als obere Deckwand des Dampfsammelraums (16) in den Zylinder- oder Kegelstumpf dicht eingepaßt ist.

4. Gerät nach einem der Ansprüche 1 bis 3, dadurch gekennzeichnet, daß die Schaltungsplatine (15) auf ihrer vom Dampfsammelraum (16) abgewandten Seite ein Batteriefach (21) aufweist und das Gerät (10) einen oberen Deckel (14), der mit dem Zentralkörper (12) wiederlösbar kuppelbar ist.

5. Gerät nach Anspruch 4, dadurch gekennzeichnet, daß zwischen Deckel (14) und Zentralkörper (12) eine Dichtung (19) ausgebildet oder angeordnet ist, die auch den nach oben weisenden Teil der Schaltung (15), insbesondere gegen Feuchtigkeitseintritt, kapselt.

6. Gerät nach Anspruch 1 oder einem der darauf folgenden, dadurch gekennzeichnet, daß der Signalbaustein (23) einen piezoelektrischen Summer umfaßt bzw. ein solcher ist.

7. Gerät nach Anspruch 1 oder einem der darauf folgenden, dadurch gekennzeichnet, daß dem Gerät (10) ein Schalter zugeordnet ist, mit dem der Batteriestromkreis an- und abschaltbar ist.

8. Gerät nach Anspruch 7, dadurch gekennzeichnet, daß der Schalter dem Deckel zugeordnet und durch dessen Verdrehen gegenüber dem Zentralkörper betätigbar ist.

9. Gerät nach Anspruch 7, dadurch gekennzeichnet, daß der Schalter zwei freie Kontakte umfaßt, die vom Wasser, in welches das Gerät eingesetzt wird, galvanisch verbindbar sind.

10. Gerät nach Anspruch 8 oder 9, dadurch gekennzeichnet, daß der Schalter sowie ggf. der Temperaturfühler in einem, sich insbesondere zentral nach unten erstreckenden säulenartigen, Geräteteil untergebracht sind, welches bei sachgemäßem Gebrauch des Geräts unter die Wasseroberfläche im Kochtopf ragt.
